# EUROPÄISCHE PATENTSCHRIFT

(11) **EP 3 347 397 B1**
(45) Veröffentlichungstag und Bekanntmachung des Hinweises auf die Patenterteilung: **26.01.2022**
(21) Anmeldenummer: 16760088.1
(22) Anmeldetag: 05.09.2016
(51) Int. Cl.: C08G 18/79, C08G 18/80, C08G 18/08, C08G 18/28, C09D 175/04

(54) **WASSEREMULGIERBARE ISOCYANATE MIT VERBESSERTEN EIGENSCHAFTEN**
WATER-EMULSIFIABLE ISOCYANATES WITH IMPROVED PROPERTIES
ISOCYANATES ÉMULSIFIABLES DANS L'EAU, PRÉSENTANT DES PROPRIÉTÉS AMÉLIORÉES

(30) Priorität: 07.09.2015 EP 15184131
(43) Veröffentlichungstag der Anmeldung: 18.07.2018
(73) Patentinhaber: BASF SE, 67056 Ludwigshafen am Rhein (DE)
(72) Erfinder: LUCAS, Frederic, 67061 Ludwigshafen am Rhein (DE); HAEBERLE, Karl, 67346 Speyer (DE); ROLLER, Sebastian, 68167 Mannheim (DE); AL-HELLANI, Rabie, 67059 Ludwigshafen (DE); TROMSDORF, Ulrich, 69123 Heidelberg (DE)
(74) Vertreter: BASF IP Association
(86) Internationale Anmeldenummer: PCT/EP2016/070792
(87) Internationale Veröffentlichungsnummer: WO 2017/042111

(56) Entgegenhaltungen:
- WO-A1-01/88006
- WO-A2-2014/048776
- DE-A1-102012 218 081

## Beschreibung

Die Erfindung liegt insbesondere auf dem Gebiet der wasseremulgierbaren Polyisocyanate.

Wasseremulgierbare Polyisocyanate werden typischerweise wässrigen Polymer-Dispersionen als Vernetzungsmittel zugesetzt und sind in der Literatur an sich vielfach beschrieben. Die Wasseremulgierbarkeit kann dadurch erreicht werden, dass man Polyisocyanate mit Umsetzungsprodukten abmischt, die durch Reaktion von Polyisocyanaten mit hydrophilen Verbindungen erhalten werden.

Die Erfindung betrifft Mischungen, die
a) mindestens ein Polyisocyanat,
b) mindestens ein Umsetzungsprodukt mindestens eines Polyisocyanats b1) mit mindestens einer Verbindung b2) mit mindestens einer hydrophilen, nicht gegenüber Isocyanat reaktiven Gruppe (Gruppe A) und genau einer gegenüber Isocyanat reaktiven Gruppe (Gruppe B)
   und
c) Dioxolan
enthalten.

Ferner betrifft die Erfindung die Verwendung der Mischungen als Zusatzmittel für wässrige Polymer-Dispersionen sowie Zweikomponenten-Beschichtungsmassen, die durch Zusatz der Mischung zu einer wässrigen Polymer-Dispersion erhältlich sind.

Bevorzugte Ausführungsformen sind der Beschreibung zu entnehmen. Kombinationen bevorzugter Ausführungsformen liegen im Rahmen dieser Erfindung.

Gebrauchseigenschaften von wäßrigen Polymerdispersionen können durch den Zusatz von Polyisocyanaten verbessert werden.

Aus der DE-A-35 21 618 sind Polyisocyanate bekannt, die Polyethergruppen enthalten und so wasseremulgierbar sind. In der DE-A-35 21 618 werden z.B. Ethylacetat, Aceton und Methylethylketon Polyisocyanaten als organische Lösungsmittel zugesetzt.

In der EP697424 werden Polyisocyanaten Kohlensäureester und Lactone als Lösungsmittel zugesetzt, um eine Verringerung der Viskosität zu erreichen.

WO07110425 beschreibt Mischungen aus wasseremulgierbaren Polyisocyanaten und organischen Lösungsmitteln der Formel C(OR₁)₂(XR₃)R₂.

WO9403516 beschreibt Mischungen aus Polyolen in Wasser bzw. einem Wasser/Lösungsmittelgemisch und Polyisocyanaten. Als Lösungsmittel wird unter anderem auch Dioxolan genannt. Eine hydrophile Modifizierung der Polyisocyanate ist laut WO9403516 im Allgemeinen nicht erforderlich, wird jedoch als mögliche Alternative angegeben. Die zur hydrophilen Modifizierung der Polyisocyanate verwendeten Verbindungen werden nicht beschrieben.

WO 01/88006 beschreibt wässrige Dispersionen hydrophil modifizierter Polyisocyanate für Beschichtungsmittel. Die hydrophil modifizierten Polyisocyanate zeichnen sich durch ihre Feinteiligkeit und Lagerstabilität aus und können unter Verwendung eines inerten Lösemittels hergestellt werden. Geeignet sind dazu die bekannten üblichen Lösemittel.

Aufgabe der vorliegenden Erfindung war es, Mischungen zur Verfügung zu stellen, welche sich möglichst feinteilig in Polymer-Dispersionen dispergieren lassen, damit die erhaltenen Zweikomponenten-Beschichtungsmassen eine hohe Lagerstabilität haben. Gleichzeitig soll eine möglichst hohe Viskositätserniedrigung der wasseremulgierbaren Polyisocyanate durch möglichst geringen Zusatz von Lösungsmittel erreicht werden, um eine verbesserte Einrührbarkeit bei hoher Polyisocyanatkonzentration der Mischungen in die Polymer-Dispersionen zu erzielen. Demgemäß wurden die oben definierten Mischungen, ihre Verwendung als Zusatzmittel für wäßrige Polymerdispersionen, sowie die entsprechenden Zweikomponenten-Beschichtungsmassen, die sie enthalten, gefunden.

Die Mischung enthält als Komponente a) mindestens ein Polyisocyanat.

Mindestens ein Polyisocyanant bedeutet ein Polyisocyanat oder eine Mischung aus zwei oder mehr Polyisocyanaten unterschiedlicher Zusammensetzung, bevorzugt ist ein Polyisocyanat. Es versteht sich, dass der Ausdruck -ein Polyisocyanat- ebenfalls ein Gemisch von Polyisocyanaten umfasst, welche sich lediglich in ihrer Kettenlänge und/oder in der Anordnung der Monomere in der Polymerkette unterscheiden.

Das mindestens eine Polyisocyanat kann durch Polymerisation von monomeren aromatischen, aliphatischen und/oder cycloaliphatischen Isocyanaten, bevorzugt von aliphatischen und/oder cycloaliphatischen (in dieser Schrift kurz (cyclo)aliphatische) Isocyanaten und besonders bevorzugt von aliphatischen Isocyanaten hergestellt werden.

Aromatische Isocyanate sind solche, die mindestens ein aromatisches Ringsystem enthalten, also sowohl rein aromatische wie auch araliphatische Verbindungen. Unter Ersteren werden Isocyanate verstanden, bei denen die Isocyanatogruppen direkt an aromatische Ringsysteme gebunden sind, wohingegen bei Letzteren die Isocyanatogruppen an Alkylengruppen gebunden sind, aber die Verbindungen auch aromatische Ringsysteme enthalten, wie es beispielsweise bei α,α,α',α'-Tetramethyl1,3-xylylndiisocyanat (TMXDI) der Fall ist.

Cycloaliphatische Isocyanate sind solche, die mindestens ein cycloaliphatisches Ringsystem enthalten.

Aliphatische Isocyanate sind solche, die ausschließlich gerade oder verzweigte Kohlenstoffketten enthalten, also acyclische Verbindungen.

Bei den monomeren aromatischen, aliphatischen und/oder cycloaliphatischen Isocyanaten kann es sich jeweils um gleiche oder unterschiedliche Isocyanate handeln.

Bei den monomeren aromatischen, aliphatischen und/oder cycloaliphatischen Isocyanaten handelt es sich bevorzugt um Diisocyanate, die genau zwei Isocyanatgruppen tragen. Es kann sich aber prinzipiell auch um Monoisocyanate mit einer Isocyanatgruppe handeln.

Es kommen prinzipiell auch höhere Isocyanate mit im Mittel mehr als zwei Isocyanatgruppen in Betracht. Dafür eignen sich beispielsweise Triisocyanate wie Triisocyanatononan, 2'-Isocyanatoethyl-(2,6-diisocyanatohexanoat), 2,4,6-Triisocyanatotoluol, Triphenylmethantriisocyanat oder 2,4,4'-Triisocyanatodiphenylether oder die Gemische aus Di-, Tri- und höheren Polyisocyanaten.

Die monomeren aromatischen, aliphatischen und/oder cycloaliphatischen Isocyanate weisen keine wesentlichen Umsetzungsprodukte der Isocyanatgruppen mit sich selbst auf.

Bei den monomeren aromatischen, aliphatischen und/oder cycloaliphatischen Isocyanaten handelt es sich bevorzugt um Isocyanate mit 4 bis 20 C-Atomen. Beispiele für übliche Diisocyanate sind aliphatische Diisocyanate wie Tetramethylendiisocyanat, 1,5-Pentamethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanates, (z.B. Methyl- oder Ethyl-2,6-diisocyanatohexanoat),Trimethylhexandiisocyanat oder Tetramethylhexandiisocyanat, cycloaliphatische Diisocyanate wie 1,4-, 1,3- oder 1,2-Di-isocyanatocyclohexan, 4,4'- oder 2,4'-Di(isocyanatocyclohexyl)methan, 1-lsocyanato-3,3,5-trimethyl-5-(isocyanatomethyl)cyclohexan (Isophorondiisocyanat), 1,3- oder 1,4-Bis(isocyanato-methyl)cyclohexan oder 2,4-, oder 2,6-Diisocyanato-1-methylcyclohexan sowie 3- (bzw. 4-), 8-(bzw. 9-)Bis(isocyanatomethyl)-tricyclo[5.2.1.02.6]decan-Isomerengemische, sowie aromatische Diisocyanate wie 2,4- oder 2,6-Toluylendiisocyanat und deren Isomerengemische, m- oder p-Xylylendiisocyanat, 2,4'- oder 4,4'-Diisocyanatodiphenylmethan und deren Isomerengemische, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldi-phenylmethan-4,4'-diisocyanat, Tetramethylxylylendiisocyanat, 1,4-Diisocyanatobenzol oder Diphenylether-4,4' -diisocyanat.

Besonders bevorzugt sind 1,6-Hexamethylendiisocyanat, 1,3-Bis(isocyanatomethyl)cyclo-hexan, Isophorondiisocyanat und 4,4'- oder 2,4'-Di(isocyanatocyclohexyl)methan, ganz besonders bevorzugt sind Isophorondiisocyanat und 1,6-Hexamethylendiisocyanat, insbesondere bevorzugt ist 1,6-Hexamethylendiisocyanat.

Es können auch Gemische der genannten Isocyanate vorliegen.

Isophorondiisocyanat liegt zumeist als ein Gemisch, und zwar der cis- und trans-Isomere vor, in der Regel im Verhältnis von ca. 60:40 bis 90:10 (w/w), bevorzugt von 70:30 bis 90:10.

Dicyclohexylmethan-4,4'-diisocyanat kann ebenfalls als Gemisch der verschiedenen cis- und trans-Isomere vorliegen.

Als Diisocyanate können sowohl solche Diisocyanate eingesetzt werden, die durch Phosgenierung der korrespondierenden Amine erhalten werden, als auch solche, die ohne die Verwendung von Phosgen, d.h. nach phosgenfreien Verfahren, hergestellt werden. Nach Angaben der EP-A-126 299 (US 4 596 678), EP-A-126 300 (US 4 596 679) und EP-A-355 443 (US 5 087 739) beispielsweise können (cyclo)aliphatische Diisocyanate, z.B. wie 1,6-Hexamethylendiisocyanat (HDI), isomere aliphatische Diisocyanate mit 6 Kohlenstoffatomen im Alkylenrest, 4,4'- oder 2,4'-Di(isocyanatocyclohexyl)methan und 1-lsocyanato-3-isocyanato-methyl-3,5,5-trimethyl-cyclohexan (Isophorondiisocyanat bzw. IPDI) hergestellt werden durch Umsetzung der (cyclo)aliphatischen Diamine mit beispielsweise Harnstoff und Alkoholen zu (cyclo)aliphatischen Biscarbaminsäureestern und deren thermische Spaltung in die entsprechenden Diisocyanate und Alkohole. Die Synthese erfolgt meist kontinuierlich in einem Kreislaufverfahren und optional in Gegenwart von N-unsubstituierten Carbaminsäureestern, Dialkylcarbonaten und anderen aus dem Reaktionsprozeß zurückgeführten Nebenprodukten. So erhaltene Diisocyanate weisen in der Regel einen sehr geringen oder sogar nicht messbaren Anteil an chlorierten Reaktionsprodukten auf, was beispielsweise in Anwendungen in der Elektronikindustrie vorteilhaft ist, ohne darauf beschränkt zu sein.

Es kann vorteilhaft sein, wenn die eingesetzten Isocyanate einen Gesamtgehalt an hydrolysierbarem Chlor von weniger als 200 ppm aufweisen, bevorzugt von weniger als 120 ppm, besonders bevorzugt weniger als 80 ppm, ganz besonders bevorzugt weniger als 50 ppm, insbesondere weniger als 15 ppm und speziell weniger als 10 ppm. Dies kann beispielsweise gemessen werden durch die ASTM-Vorschrift D4663-98. Es können aber selbstverständlich auch monomere Isocyanate mit einem höheren Chlorgehalt eingesetzt werden, beispielsweise bis zu 500 ppm.

Selbstverständlich können auch Gemische aus solchen monomeren Isocyanaten, die durch Umsetzung der (cyclo)aliphatischen Diamine mit beispielsweise Harnstoff und Alkoholen und Spaltung der erhaltenen (cyclo)aliphatischen Biscarbaminsäureester erhalten worden sind, mit solchen Diisocyanaten, die durch Phosgenierung der korrespondierenden Amine erhalten worden sind, eingesetzt werden.

Das mindestens eine Polyisocyanat, zu dem die monomeren Isocyanate polymerisiert werden können, ist in der Regel wie folgt charakterisiert:
Die mittlere NCO-Funktionalität des mindestens einen Polyisocyanats beträgt in der Regel mindestens 1,8 und kann bis zu 8 betragen, beispielsweise bis zu 6, bevorzugt 2 bis 5 und besonders bevorzugt 2,4 bis 4.

Der Gehalt an Isocyanatgruppen nach der Polymerisierung, berechnet als NCO = 42 g/mol, beträgt, wenn nicht anders angegeben, in der Regel von 5 bis 30 Gew%.

Bevorzugt handelt es sich bei dem mindestens einen Polyisocyanat um folgende Verbindungen:
1) Ein oder mehrere Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanatoisocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkylisocyanurate, welche cyclische Trimere der Diisocyanate darstellen, oder um Gemische mit ihren höheren, mehr als einen Isocyanuratring aufweisenden Homologen. Die Isocyanatoisocyanurate haben im Allgemeinen einen NCO-Gehalt von 10 bis 30 Gew.-%, insbesondere 15 bis 25 Gew.-% und eine mittlere NCO-Funktionalität von 2,6 bis 8. Die Isocyanuratgruppen aufweisenden Polyisocyanate können in geringerem Umfang auch Urethan- und/oder Allophanat-Gruppen enthalten, bevorzugt mit einem Gehalt gebundenen Alkohols von kleiner 2 Gew.-% bezogen auf das Polyisocyanat.
2) Ein oder mehrere Uretdiongruppen aufweisende Polyisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten.
   Uretdiongruppen aufweisende Polyisocyanate werden häufig im Gemisch mit anderen Polyisocyanaten, insbesondere den unter Punkt 1) genannten, erhalten. Uretdiongruppen aufweisende Polyisocyanate weisen üblicherweise NCO-Funktionalitäten von 2 bis 3 auf.
   Dazu können die Diisocyanate unter Reaktionsbedingungen umgesetzt werden, unter denen sowohl Uretdiongruppen als auch die anderen Polyisocyanate gebildet werden, oder zunächst die Uretdiongruppen gebildet und diese anschließend zu den anderen Polyisocyanaten umgesetzt werden oder die Diisocyanate zunächst zu den anderen Polyisocyanaten und diese anschließend zu Uretdiongruppen-haltigen Produkten umgesetzt werden.
3) Ein oder mehrere Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris-(6-isocyanatohexyl)-biuret oder dessen Gemische mit seinen höheren Homologen. Diese Biuretgruppen aufweisenden Polyisocyanate weisen im Allgemeinen einen NCO-Gehalt von 18 bis 24 Gew.-% und eine mittlere NCO-Funktionalität von 2,8 bis 6 auf.
4) Ein oder mehrere Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Diisocyanat, beispielsweise Hexamethylendiisocyanat oder Isophorondiisocyanat, mit ein- oder mehrwertigen Alkoholen. Diese Urethan- und/oder Allophanatgruppen aufweisenden Polyisocyanate haben im Allgemeinen einen NCO-Gehalt von 12 bis 24 Gew.-% und eine mittlere NCO-Funktionalität von 2,0 bis 4,5.
   Solche Urethan- und/oder Allophanatgruppen aufweisenden Polyisocyanate können unkatalysiert oder bevorzugt in Gegenwart von Katalysatoren, wie beispielsweise Ammoniumcarboxylaten oder -hydroxiden, oder Allophanatisierungskatalysatoren, z.B. Wismut-, Kobalt-, Cäsium-, Zn-(II)- oder Zr-(IV)-Verbindungen, jeweils in Anwesenheit von ein-, zwei- oder mehrwertigen, bevorzugt einwertigen Alkoholen, hergestellt werden.
   Urethan- und/oder Allophanatgruppen aufweisende Polyisocyanate treten häufig in Mischformen mit den unter Punkt 1) genannten Polyisocyanaten auf.
5) Ein oder mehrere Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate könne aus Diisocyanat und Kohlendioxid zugänglich sein.
6) Ein oder mehrere Iminooxadiazindiongruppen enthaltende Polyisocyanate, vorzugsweise von Hexamethylendiisocyanat oder Isophorondiisocyanat abgeleitet. Solche Iminooxadiazindiongruppen enthaltenden Polyisocyanate sind zum Beispiel aus Diisocyanaten mittels spezieller Katalysatoren herstellbar.
7) Ein oder mehrere Uretonimin-modifizierte Polyisocyanate.
8) Ein oder mehrere Carbodiimid-modifizierte Polyisocyanate.
9) Ein oder mehrere Hyperverzweigte Polyisocyanate, wie sie beispielsweise bekannt sind aus der DE-A 10013186 oder DE-A 10013187.
10) Die unter den vorgenannten Punkten beschriebenen Polyisocyanate 1)-9), bevorzugt 1), 2), 3), 4) und 6) können nach deren Herstellung in Biuretgruppen- oder Urethan-/Allophanat-Gruppen aufweisende Polyisocyanate mit aromatisch, cycloaliphatisch oder aliphatisch gebundenen, bevorzugt (cyclo)aliphatisch gebundenen Isocyanatgruppen, überführt werden. Die Bildung von Biuretgruppen erfolgt beispielsweise durch Zugabe von Wasser oder Umsetzung mit Aminen. Die Bildung von Urethan- und/oder Allophanatgruppen erfolgt durch Umsetzung mit ein-, zwei- oder mehrwertigen, bevorzugt einwertigen Alkoholen, optional in Gegenwart von geeigneten Katalysatoren. Diese Biuret- oder Urethan-/Allophanatgruppen aufweisenden Polyisocyanate weisen im Allgemeinen einen NCO-Gehalt von 10 bis 25 Gew.-% und eine mittlere NCO-Funktionalität von 3 bis 8 auf.
11) Polyisocyanate, die neben den unter 1) bis 10) beschriebenen Gruppen noch solche enthalten, die formal durch Addition von Molekülen mit NCO-reaktiven Gruppen und durch UV- oder aktinische Strahlung vernetzbare Gruppen an die Isocyanatgruppen obiger Moleküle entstehen. Bei diesen Molekülen handelt es sich beispielsweise um Hydroxyallkyl(meth)acrylate und andere Hydroxy-Vinylverbindungen.

Die oben aufgeführten Diisocyanate oder Polyisocyanate können auch zumindest teilweise in blockierter Form vorliegen.

Zur Blockierung eingesetzte Verbindungsklassen sind beschrieben in D. A. Wicks, Z. W. Wicks, Progress in Organic Coatings, 36, 148-172 (1999), 41, 1-83 (2001) sowie 43, 131-140 (2001).

Beispiele für zur Blockierung eingesetzte Verbindungsklassen sind Phenole, Imidazole, Triazole, Pyrazole, Oxime, N-Hydroxyimide, Hydroxybenzoesäureester, sekundäre Amine, Lactame, CH-acide cyclische Ketone, Malonsäureester oder Alkylacetoacetate.

Es kann vorteilhaft sein, wenn das mindestens eine Polyisocyanat ausgewählt ist aus der Gruppe bestehend aus Isocyanuraten, Biureten, Urethanen und Allophanaten, bevorzugt aus der Gruppe bestehend aus Isocyanuraten, Urethanen und Allophanaten, besonders bevorzugt handelt es sich um ein isocyanuratgruppenhaltiges Polyisocyanat.

Besonders bevorzugt handelt es sich dem mindestens einen Polyisocyanat um ein Polyisocyanat auf Basis von aliphatischen Diisocyanaten, ganz besonders bevorzugt auf Basis von 1,6-Hexamethylendiisocyanat.

Des Weiteren besonders bevorzugt handelt es sich bei dem mindestens einen Polyisocyanat um ein Gemisch von Polyisocyanaten, ganz besonders bevorzugt solche auf der Basis von von 1,6-Hexamethylendiisocyanat und solche auf der Basis von Isophorondiisocyanat.

In einer besonders bevorzugten Ausführungsform handelt es sich bei dem mindestens einen Polyisocyanat um ein Gemisch enthaltend niedrigviskose Polyisocyanate, bevorzugt niedrigviskose Isocyanuratgruppen enthaltende Polyisocyanate, mit einer Viskosität von 600 bis 3500 mPa*s, insbesondere unter 1500 mPa*s, niederviskose Urethane und/oder Allophanate mit einer Viskosität von 200 bis 1600 mPa*s, insbesondere 500 bis 1500 mPa*s, und/oder Iminooxadiazindiongruppen enthaltende Polyisocyanate mit einer Viskosität von 400 bis 2000 mPa*s, insbesondere 500 bis 1500 mPa*s.

Die in dieser Schrift angegebenen Viskositätswerte werden gemäß DIN EN ISO 3219/A.3 bei 23 °C mit einem Kegel-Platte-System mit einem Geschwindigkeitsgefälle von 1000 s⁻¹ bestimmt, falls nicht anders vermerkt.

Das mindestens eine Polyisocyanat kann beispielsweise nach Methoden hergestellt werden, die dem Fachmann bekannt sind.

Das Verfahren zur Herstellung des mindestens einen Polyisocyanats kann erfolgen, wie in WO 2008/68198 beschrieben, dort besonders von Seite 20, Zeile 21 bis Seite 27, Zeile15, was hiermit durch Bezugnahme Bestandteil der vorliegenden Anmeldung sei.

Die Reaktion kann beispielsweise abgebrochen werden, wie dort von Seite 31, Zeile 19 bis Seite 31, Zeile 31 beschrieben und die Aufarbeitung erfolgen wie dort beschrieben von Seite 31, Zeile 33 bis Seite 32, Zeile 40, was hiermit jeweils durch Bezugnahme Bestandteil der vorliegenden Anmeldung sei.

Die Reaktion kann alternativ auch abgebrochen werden, wie in WO 2005/087828 von Seite 11, Zeile 12 bis Seite 12, Zeile 5 beschrieben, was hiermit durch Bezugnahme Bestandteil der vorliegenden Anmeldung sei.

In den Verfahren zur Herstellung des mindestens einen Polyisocyanats können thermisch nichtlabile als auch thermisch labile Katalysatoren eingesetzt werden.

Werden in dem Verfahren zur Herstellung des mindestens einen Polyisocyanats thermisch labile Katalysatoren eingesetzt, ist es weiterhin auch möglich, die Reaktion abzubrechen durch Erhitzen des Reaktionsgemischs auf eine Temperatur oberhalb von mindestens 80 °C, bevorzugt mindestens 100 °C, besonders bevorzugt mindestens 120 °C. Dafür reicht in der Regel bereits die Erwärmung des Reaktionsgemischs, wie sie zur Abtrennung des unumgesetzten Isocyanats durch Destillation in der Aufarbeitung erforderlich ist.

Sowohl bei thermisch nicht-labilen als auch bei thermisch labilen Katalysatoren besteht die Möglichkeit, durch Zugabe von Deaktivatoren die Reaktion bei niedrigeren Temperaturen abzubrechen. Geeignete Deaktivatoren sind beispielsweise Chlorwasserstoff, Phosphorsäure, organische Phosphate, wie Dibutylphosphat oder Diethylhexylphosphat, Carbamate wie Hydroxyalkylcarbamat oder organische Carbonsäuren.

Diese Verbindungen werden pur oder verdünnt in geeigneter Konzentration, die zum Reaktionsabbruch erforderlich ist, zugegeben.

Di-, Tri- und höhere Polyisocyanate können beispielsweise durch Phosgenierung von entsprechenden Anilin/Formaldehyd-Kondensaten erhalten werden und Methylenbrücken aufweisende Polyphenylpolyisocyanate darstellen.

Die Mischung enthält als Komponente b) mindestens ein Umsetzungsprodukt mindestens eines Polyisocyanates b1) mit mindestens einer Verbindung b2).

Mindestens ein Umsetzungsprodukt bedeutet ein Umsetzungsprodukt oder eine Mischung aus zwei oder mehr Umsetzungsprodukten, welche sich in den Komponenten b1) und/oder b2) unterscheiden, bevorzugt ist ein Umsetzungsprodukt.

Das mindestens eine Polyisocyanat b1) kann mit dem mindestens einen unter a) beschrieben Polyisocyanat gleich oder verschieden sein. Bevorzugt ist das mindestens eine unter b1) verwendete Polyisocyanat mit dem mindestens einen Polyisocyanat unter a) gleich.

Mindestens eine Verbindung b2) bedeutet eine Mischung aus zwei oder mehr unterschiedlichen Verbindungen b2), bevorzugt ist eine Verbindung b2).

Die mindestens eine Verbindung b2) kann ein Monomer, Oligomer oder Polymer sein.

Die mindestens eine Verbindung b2) enthält genau eine gegenüber Isocyanat reaktive Gruppe (Gruppe B).

Unter einer mit Isocyanat reaktiven Gruppe (Gruppe B) ist im Rahmen dieser Erfindung eine Gruppe zu verstehen, die über mit NCO-Gruppen reaktive Wasserstoffatome verfügt oder die mit NCO-Gruppen unter den normalen Verfahrensbedingungen bei der Umsetzung eine Additionsverbindung eingehen kann. Diese Verfahrensbedingungen sind dem Fachmann an sich bekannt.

Beispielsweise ist diese Gruppe B eine Hydroxy-, Mercapto-, primäre oder sekundäre Aminogruppe (kurz NH-Gruppe), ein Epoxid, eine Säureanhydrid-, eine Monophosphorsäureether- oder eine Carbodiimidgruppe. Bevorzugt ist eine Hydroxy-, Mercapto- oder primäre oder sekundäre Aminogruppe (kurz NH-Gruppe). Besonders bevorzugt ist eine Hydroxygruppe.

Die mindestens eine Verbindung b2) enthält mindestens eine hydrophile, nicht gegenüber Iso-cyanat reaktive Gruppe (Gruppe A).

Unter einer nicht gegenüber Isocyanat reaktiven Gruppe (Gruppe A) ist im Rahmen dieser Erfindung eine Gruppe zu verstehen, die mit NCO-Gruppen unter den normalen Verfahrensbedingungen bei der Umsetzung keine Additionsverbindung eingehen kann. Diese Verfahrensbedingungen sind dem Fachmann an sich bekannt.

Bei der Gruppe A kann es sich zum Beispiel um eine ionische oder in eine ionische Gruppe überführbare Gruppe handeln.

Anionische bzw. in anionische Gruppen überführbare Gruppen sind zum Beispiel Carbonsäure- oder Sulfonsäuregruppen.

Kationische bzw. in kationische Gruppen überführbare Gruppen sind zum Beispiel quarternäre Ammoniumgruppen bzw. tertiäre Aminogruppen.

In ionische Gruppen überführbare Gruppen werden vorzugsweise vor oder während der Dispergierung der erfindungsgemäßen Mischung in Wasser in ionische Gruppen überführt.

Zur Überführung zum Beispiel von Carbonsäuregruppen oder Sulfonsäuregruppen in anionische Gruppen können anorganische und/oder organische Basen wie Natriumhydroxid, Kaliumhydroxid, Kaliumcarbonat, Natriumhydrogencarbonat, Ammoniak oder primäre, sekundäre und besonders tertiäre Amine, z.B. Triethylamin oder Dimethylaminopropanol eingesetzt werden.

Zur Überführung von tertiären Aminogruppe in die entsprechenden Kationen, z.B. Ammoniumgruppen, sind als Neutralisationsmittel anorganische oder organische Säuren, z.B. Salzsäure, Essigsäure, Fumarsäure, Maleinsäure, Milchsäure, Weinsäure, Oxalsäure oder Phosphorsäure oder als Quarternierungsmittel, z.B. Methylchlorid, Methyliodid, Dimethylsulfat, Benzylchlorid, Chloressigethylester oder Bromacetamid geeignet. Weitere geeignete Neutralisations und Quarternierungsmittel sind z.B. in der US-PS 3 479 310, Spalte 6, beschrieben.

Der Gehalt der ionischen Gruppen bzw. in ionische Gruppen überführbare Gruppen beträgt vorzugsweise 0,1 bis 3 mol pro kg der Summe der Komponenten a) und b).

Bei der Gruppe A kann es sich zum Beispiel um eine nichtionische, hydrophile Gruppe handeln.

Nichtionische Gruppen sind z.B. Polyalkylenethergruppen, insbesondere solche mit 10 bis 80 Alkylenoxideinheiten.

Bevorzugt sind Polyethylenethergruppen oder Polyalkylenethergruppen, die neben anderen Alkylenoxideinheiten, z.B. Propylenoxid, mindestens 10 Ethylenoxideinheiten enthalten.

Der Gehalt der hydrophilen nichtionischen Gruppen, insbesondere der Polyalkylenethergruppen beträgt vorzugsweise 0,5 bis 20, besonders bevorzugt 1 bis 30 Gew.-%, bezogen auf die Summe der Komponenten a) und b).

Geeignet als mindestens eine Verbindung b2) sind zum Beispiel aliphatische, cycloaliphatische, araliphatische oder aromatische Hydroxy- bzw. Aminsulfonsäuren.

Bevorzugt handelt es sich bei der mindentens einen Verbindung b2) um Hydroxethansulfonsäure, Hydroxypropansulfonsäure, Mercaptoethansulfonsäure, Mercaptopropansulfonsäure, Aminomethansulfonsäure, Taurin, Aminopropansulfonsäure, N-Cyclohexylaminopropansulfonsäure, N-Cyclohexylaminoethansulfonsäure sowie deren Alkali-, Erdalkali- oder Ammoniumsalze und besonders bevorzugt um die genannten Monohydroxysulfonsäuren sowie Monoaminosulfonsäuren.

Ebenfalls bevorzugt handelt es sich der mindestens einen Verbindung b2) um Polyalkylenetheralkohole, besonders bevorzugt um Polyethylenetheralkohole.

Die Polyalkylenetheralkohole und Polyethylenetheralkohole weisen bevorzugt ein Molekulargewicht Mₙ von mindestens 500, besonders bevorzugt mindestens 1200 g/mol auf. Das Molekulargewicht Mₙ kann prinzipiell nach oben unbegrenzt sein, bevorzugt bis zu 50.000, besonders bevorzugt bis zu 20.000 g/mol, ganz besonders bevorzugt bis zu 10.000 g/mol und insbesondere bis zu 5.000 g/mol betragen.

Bevorzugte OH-Zahlen der Polyalkylenetheralkohole und Polyethylenetheralkohole, gemessen gemäß DIN 53240-2 (potentiometrisch), sind 40-350 mg KOH/g Festharz, bevorzugt 80-180 mg KOH/g Festharz.

Zur Herstellung Komponente b) wird das mindestens eine Polyisocyanat b1) umgesetzt mit mindestens einer Verbindung b2).

Die Herstellung der Komponente b) ist zum Beispiel aus der DE-A-35 21 618, DE-A-40 01 783 und DE-A-42 03 51 O bekannt.

Bei der Herstellung kann die mindestens eine Verbindung b2) mit einem Teil der Komponente a) umgesetzt und anschließend mit dem Rest der Komponente a) gemischt werden.

Die Herstellung kann aber auch so erfolgen, dass die mindestens eine Verbindung b2) zur Gesamtmenge der Komponente a) zugesetzt wird und dann die Umsetzung im selben Reaktionsgefäß durchgeführt wird.

Bevorzugte Komponenten b) sind solche mit hydrophilen, nichtionischen Gruppen, insbesondere Polyalkylenethergruppen. Vorzugsweise wird dabei die Wasseremulgierbarkeit allein durch die hydrophilen nichtionischen Gruppen erreicht.

Die Mischung enthält als Komponente C) Dioxolan.

Die Mischung enthält vorzugsweise 2 bis 70, besonders bevorzugt 2 bis 50 und ganz besonders bevorzugt 2 bis 40 Gew.-% des Dioxolan c), bezogen auf die Summe der Komponenten a) und b) und c).

Vorzugsweise besteht die Mischung nur aus den Komponenten a), b) und c). Die Mischung kann jedoch noch mindestens ein zusätzliches Lösemittel wie Methoxypropylacetat Dipropylenglycol Dimethylether, Butylglycolacetat, Propylencarbonat, TME 1,1,2,2,- Tetramethoxyethan, Dioxan, Ethylacetat, Butylacetat, Ethylenglykolmonoethyl- oder -ethyletheracetat, 1-Me-thoxypropyl-2-acetat, 2-Butanon, 4-Methyl-2-pentanon, Cyclohexan, Toluol, Propylenglykoldiacetat, Diethylenglykoldimethylether, Diethylenglykolethyl- und -butyletheracetat, N-Methylpyrrolidon, N-Methylcaprolactam und THF enthalten. Im Allgemeinen beträgt das Verhältnis von Dioxolan zur Summe an zusätzlichen Lösungsmitteln 90:10 - 10:90, bevorzugt 70:30 - 30:70.

Die Mischung eignet sich zum Beispiel als Zusatz-, insbesondere als Vernetzungsmittel für wäßrige Polymerdispersionen.

Die Umsetzung der Mischung mit einer wäßrigen Polymerdispersion kann nach einen langen Zeitraum erfolgen, der eine entsprechende Lagerung der Mischung erfordert. Die Lagerung der Mischung erfolgt zwar bevorzugter weise bei Raumtemperatur, kann aber auch bei höheren Temperaturen erfolgen. In der Praxis sind Erwärmung der Mischung auf 40 °C, 60 °C, selbst bis 80 °C durchaus möglich.

Bei den in der Polymerdispersion dispergierten Polymeren kann es sich beispielsweise um Polyacrylatpolyole, Polyesterpolyole, Polyetherpolyole, Polyurethanpolyole; Polyharnstoffpolyole; Polyesterpolyacrylatpolyole; Polyesterpolyurethanpolyole; Polyurethanpolyacrylatpolyole, Polyurethanmodifizierte Alkydharze; Fettsäuremodifizierte Polyesterpolyurethanpolyole, Kopolymerisate mit Allylethern, Propfpolymerisate aus den genannten Stoffgruppen mit z.B. unterschiedlichen Glasübergangstemperaturen, sowie Mischungen der genannten Polymere handeln. Bevorzugt sind Polyacrylatpolyole, Polyesterpolyole und Polyurethanpolyole.

Bevorzugte OH-Zahlen, gemessen gemäß DIN 53240-2 (potentiometrisch), sind 40-350 mg KOH/g Festharz für Polyester, bevorzugt 80-180 mg KOH/g Festharz, und 15-250 mg KOH/g Festharz für Polyacrylatole, bevorzugt 80-160 mg KOH/g.

Zusätzlich können die in der Polymerdisperison dispergierten Polymere eine Säurezahl gemäß DIN EN ISO 3682 (potentiometrisch) bis 200 mg KOH/g, bevorzugt bis 150 und besonders bevorzugt bis 100 mg KOH/g aufweisen.

Besonders bevorzugte die in der Polymerdisperison dispergierte Polymere sind Polyacrylatpolyole und Polyesterole.

Polyacrylatpolyole weisen bevorzugt ein Molekulargewicht Mₙ von mindestens 500, besonders bevorzugt mindestens 1200 g/mol auf. Das Molekulargewicht Mₙ kann prinzipiell nach oben unbegrenzt sein, bevorzugt bis zu 50.000, besonders bevorzugt bis zu 20.000 g/mol, ganz besonders bevorzugt bis zu 10.000 g/mol und insbesondere bis zu 5.000 g/mol betragen.

Die in der Polymerdispersion dispergierten Polymere können durch Polymerisation nach üblichen Verfahren hergestellt werden. Die Herstellung der in der Polymerdispersion dispergierten Polymere erfolgt bevorzugt mittels Emulsionspolymerisation.

Vorzugsweise werden hydroxyfunktionelle Monomere im Gemisch mit anderen polymerisierbaren, bevorzugt radikalisch polymerisierbaren Monomeren, copolymerisiert.

Hydroxyfunktionelle Monomere können in solchen Mengen bei der Kopolymerisation mit verwendet, dass die obengenannten Hydroxylzahlen der Kopolymere resultieren, die im allgemeinen einem Hydroxygruppengehalt der Kopolymere von 0,5 bis 8, vorzugsweise 1 bis 5 Gew.-% entsprechen.

Bevorzugt handelt es sich um hydroxygruppenhaltige Kopolymere aus mindestens einem hydroxy-gruppenhaltigen (Meth)acrylat mit mindestens einem weiteren polymerisationsfähigen Komonomer ausgewählt aus der Gruppe bestehend aus (Meth)acrylsäurealkylestern, Vinylaromaten, α, β-ungesättigten Carbonsäuren und anderen Monomeren.

Als (Meth)acrylsäurealkylestern genannt seien z.B. C₁-C₂₀-Alkyl(meth)acrylate, Vinylaromaten sind solche mit bis zu 20 C-Atomen, α,β-ungesättigte Carbonsäuren umfassen auch deren Anhydride und andere Monomere sind beispielsweise Vinylester von bis zu 20 C-Atomen enthaltenden Carbonsäuren, ethylenisch ungesättigte Nitrile, Vinylether von 1 bis 10 C-Atome enthaltenden Alkoholen und, weniger bevorzugt, aliphatische Kohlenwasserstoffe mit 2 bis 8 C-Atomen und 1 oder 2 Doppelbindungen.

Als (Meth)acrylsäurealkylester bevorzugt sind solche mit einem C₁-C_{1O}-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, Vinylstearat, Vinylpropionat und Vinylacetat.

α,β-Ungesättigte Carbonsäuren und deren Anhydride können beispielsweise sein Acrylsäure, Methacrylsäure, Fumarsäure, Crotonsäure, Itaconsäure, Maleinsäure oder Maleinsäureanhydrid, bevorzugt Acrylsäure.

Als hydroxyfunktionelle Monomere seien Monoester von α,β-ungesättigten Carbonsäuren, wie Acrylsäure, Methacrylsäure (in dieser Schrift kurz als "(Meth)acrylsäure" bezeichnet), mit Di- oder Polyolen erwähnt, die vorzugsweise 2 bis 20 C-Atome und wenigstens zwei Hydroxygruppen aufweisen, wie Ethylenglykol, Diethylenglykol, Triethylenglykol, 1,2-Propylenglykol, 1,3-Propylenglykol, 1,1-Dimethyl-1,2-Ethandiol, Dipropylenglykol, Triethylenglykol, Tetraethylenglykol, Pentaethylenglykol, Tripropylenglykol, 1,4-Butandiol, 1,5-Pentandiol, Neopentylglykol, Hydroxypivalinsäureneopentylglykolester, 2-Ethyl-1,3-Propandiol, 2-Methyl-1,3-Propandiol, 2-Butyl-2-ethyl-1,3-Propandiol, 1,6-Hexandiol, 2-Methyl-1,5-pentandiol, 2-Ethyl-1,4-butandiol, 2-Ethyl-1,3-Hexandiol, 2,4-Diethyl-oktan-1,3-diol, 2,2-Bis(4-hydroxycyclohexyl)propan, 1,1-, 1,2-, 1,3- und 1,4-Bis(hydroxymethyl)-cyclohexan, 1,2-, 1,3- oder 1,4-Cyclohexandiol, Glycerin, Trimethylolethan, Trimethylolpropan, Trimethylolbutan, Pentaerythrit, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit, Isomalt, Poly-THF mit einem Molekulargewicht zwischen 162 und 4500, bevorzugt 250 bis 2000, Poly-1,3-propandiol oder Polypropylenglykol mit einem Molekulargewicht zwischen 134 und 2000 oder Polyethylenglykol mit einem Molekulargewicht zwischen 238 und 2000 sein.

Bevorzugt sind 2-Hydroxyethylacrylat, 2-Hydroxyethylmethacrylat, 2- oder 3-Hydroxypropylacrylat, 1,4-Butandiolmonoacrylat oder 3-(Acryloyloxy)-2-hydroxypropylacrylat und besonders bevorzugt 2-Hydroxyethylacrylat und/oder 2-Hydroxyethylmethacrylat.

Als vinylaromatische Verbindungen kommen z.B. Vinyltoluol, α-Butylstyrol, α-Methylstyrol, 4-n-Butylstyrol, 4-n-Decylstyrol und vorzugsweise Styrol in Betracht.

Beispiele für Nitrile sind Acrylnitril und Methacrylnitril.

Geeignete Vinylether sind z.B. Vinylmethylether, Vinylisobutylether, Vinylhexylether und Vinyloctylether.

Als nicht aromatische Kohlenwasserstoffe mit 2 bis 8 C-Atomen und einer oder zwei olefinischen Doppelbindungen seien Butadien, Isopren, sowie Ethylen, Propylen und Isobutylen genannt.

Weiterhin sind N-Vinylformamid, N-Vinylpyrrolidon sowie N-Vinylcaprolactam einsetzbar, weiterhin, ethylenisch ungesättigte Säuren, insbesondere Carbonsäuren, Säureanhydride oder Säureamide, sowie Vinylimidazol. Auch Epoxidgruppen aufweisende Komonomere wie z.B. Glycidylacrylat oder -methacrylat oder Monomere wie N-Methoxymethylacrylamid oder-methacrylamid können in geringen Mengen mit verwendet werden.

Bevorzugt sind Ester der Acrylsäure bzw. der Methacrylsäure mit 1 bis 18, vorzugsweise 1 bis 8 Kohlenstoffatomen im Alkoholrest wie z.B. Methylacrylat. Ethylacrylat, Iso-propylacrylat, n-Propylacrylat, n-Butylacrylat, 2-Ethylhexylacrylat, n-Stearylacrylat, die diesen Acrylaten entsprechenden Methacrylate, Styrol, alkylsubstituierte Styrole, Acrylnitril, Methacrylnitril, Vinylacetat oder Vinylstearat bzw. beliebige Gemische derartiger Monomere.

Weitere in der Polymerdispersion dispergierte Polymere sind z.B. Polyesterpolyole, wie sie durch Kondensation von Polycarbonsäuren, insbesondere Dicarbonsäuren mit Polyolen, insbesondere Diolen erhältlich sind. Um eine für die Polymerisation angemessene Funktionalität des Polyesterpolyols zu gewährleisten werden partiell auch Triole, Tetrole etc. wie auch Trisäuren, etc. eingesetzt.

Polyesterpolyole, sind z.B. aus Ullmanns Enzyklopädie der technischen Chemie, 4. Auflage, Band 19, S. 62 bis 65 bekannt. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, aromatisch oder heterocyclisch sein und optional, z.B. durch Halogenatome, substituiert und/oder ungesättigt sein. Als Beispiele hierfür seien genannt:
Oxalsäure, Maleinsäure, Fumarsäure, Bernsteinsäure, Glutarsäure, Adipinsäure, Sebacinsäure, Dodekandisäure, o-Phthalsäure, Isophthalsäure, Terephthalsäure, Trimellithsäure, Azelainsäure, 1,4-Cyclohexandicarbonsäure oder Tetrahydrophthalsäure, Korksäure, Azelainsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäureanhydrid, dimere Fettsäuren, deren Isomere und Hydrierungsprodukte sowie veresterbare Derivate, wie Anhydride oder Dialkylester, beispielsweise C₁-C₄-Alkylester, bevorzugt Methyl-, Ethyl- oder n-Butylester, der genannten Säuren eingesetzt werden. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, besonders bevorzugt Bernsteinsäure, Adipinsäure, Sebacinsäure und Dodecandicarbonsäure.

Als mehrwertige Alkohole kommen zur Herstellung der Polyesterole in Betracht 1,2-Propandiol, Ethylenglykol, 2,2-Dimethyl-1,2-Ethandiol, 1,3-Propandiol, 1,2-Butandiol, 1,3-Butandiol, 1,4-Butandiol, 3-Methylpentan-1,5-diol, 2-Ethylhexan-1,3-diol, 2,4-Diethyloctan-1,3-diol, 1,6-Hexandiol, Poly-THF mit einer Molmasse zwischen 162 und 4500, bevorzugt 250 bis 2000, Poly-1,3-propandiol mit einer Molmasse zwischen 134 und 1178, Poly-1,2-propandiol mit einer Molmasse zwischen 134 und 898, Polyethylenglykol mit einer Molmasse zwischen 106 und 458, Neopentylglykol, Hydroxypivalinsäureneopentylglykolester, 2-Ethyl-1,3-Propandiol, 2-Methyl-1,3-Propandiol, 2,2-Bis(4-hydroxycyclohexyl)propan, 1,1-, 1,2-, 1,3- und 1,4-Cyclohexandimethanol, 1,2-, 1,3- oder 1,4-Cyclohexandiol, Trimethylolbutan, Trimethylolpropan, Trimethylolethan, Neopentylglykol, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit oder Isomalt, die optional wie oben beschrieben alkoxiliert sein können.

Bevorzugt sind Alkohole der allgemeinen Formel HO-(CH₂)ₓ-OH, wobei x eine Zahl von 1 bis 20, bevorzugt eine gerade Zahl von 2 bis 20 ist. Bevorzugt sind Ethylenglykol, Butan-1,4-diol, Hexan-1,6-diol, Octan-1,8-diol und Dodecan-1,12-diol. Weiterhin bevorzugt ist Neopentylglykol.

Ferner kommen auch Polycarbonat-Diole in Betracht, wie sie z.B. durch Umsetzung von Phosgen mit einem Überschuss von den als Aufbaukomponenten für die Polyesterpolyole genannten niedermolekularen Alkohole erhalten werden können.

Geeignet sind auch Polyesterdiole auf Lacton-Basis, wobei es sich um Homo- oder Mischpolymerisate von Lactonen, bevorzugt um endständige Hydroxygruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)Z-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caproiacton, β-Propiolacton, gamma-Butyrolacton und/oder Methyl-ε-caprolacton, 4-Hydroxybenzoesäure, 6-Hydroxy-2-naphthalinsäure oder Pivalolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Capro-lactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Werden die wässrigen Polymerdispersionen in Polyurethanlacken eingesetzt, sind Molmassen Mₙ der Polyester von 800 - 4000 g/mol üblich, wobei die hier verwendeten Polyester nicht darauf beschränkt sind.

Weiterhin sind als in der Polymerdispersion dispergierte Polymere auch Polyetherole geeignet, die durch Addition von Ethylenoxid, Propylenoxid und/oder Butylenoxid, bevorzugt Ethylenoxid und/oder Propylenoxid und besonders bevorzugt Ethylenoxid an H-aktive Komponenten hergestellt werden. Ebenso sind Polykondensate aus Butandiol geeignet. In Polyurethanlacken sind Molmassen der Polyether von 500-2000 g/mol üblich, wobei die hier verwendeten Polyether nicht darauf beschränkt sind.

Die in der Polymerdispersion dispergierten Polymere können zumindest teilweise durch sogenannte Reaktivverdünner ersetzt werden. Dabei kann es sich um blockierte sekundäre oder primäre Amine (Aldimine und Ketime) oder um Verbindungen mit sterisch gehinderten und / oder elektronenarmen sekundären Aminogruppen handeln, beispielsweise Asparaginsäureester gemäß EP 403921 oder WO 2007/39133.

Unter einer Zweikomponenten-Beschichtungsmasse wird im Rahmen der vorliegenden Schrift ein Gemisch zum Beschichten mindestens eines Substrats zum Zwecke einer Ausbildung eines Films und, nach Härtung, einer klebfreien Beschichtung vorgesehen ist.

Die Zweikomponenten-Beschichtungsmasse wird durch Zusatz einer Mischung enthaltend mindestens ein Polyisocyanat, mindestens ein Umsetzungsprodukt mindestens eines Polyisocyanats b1) mit mindestens einer Verbindung b2) mit mindestens einer hydrophilen, nicht gegenüber Isocyanat reaktiven Gruppe (Gruppe A) und genau einer gegenüber Isocyanat reaktiven Gruppe (Gruppe B) und Dioxolan zu einer wässrigen Polymerdispersion erhalten.

Bevorzugt wird die Mischung und die wässrige Polymerdispersion in einem Molverhaltnis von Isocyanatgruppen in der erfindungsgemäßen Mischung zu gegenuber Isocyanat reaktiven Gruppen in der wässrigen Polymerdispersion von 0,1:1 bis 10:1, bevorzugt 0,2:1 bis 5:1, besonders bevorzugt 0,3:1 bis 3:1, ganz besonders bevorzugt 0,5:1 bis 2:1, insbesondere 0,8:1 bis 1,2:1 und speziell 0,9:1 bis 1,1:1 miteinander vermischt.

Die erhaltene Zweikomponenten-Beschichtungsmasse eignet sich zum Beschichten von Substraten wie Holz, Holzfurnier, Papier, Pappe, Karton, Textil, Folie, Leder, Vlies, Kunststoffoberflächen, Glas, Keramik, mineralischen Baustoffen, wie Zement-Formsteine und Faserzementplatten oder Metallen, die jeweils optional vorbeschichtet bzw. vorbehandelt sein können.

Derartige Beschichtungsmassen eignen sich als oder in Innen- oder Außenbeschichtungen, also solche Anwendungen, die dem Tageslicht ausgesetzt sind, bevorzugt von Gebäudeteilen, Beschichtungen auf (Groß-)Fahrzeugen und Flugzeugen und industriellen Anwendungen, Nutzfahrzeuge im landwirtschaftlichen und Baubereich, Dekolackierungen, Brücken, Gebäuden, Strommasten, Tanks, Containern, Pipelines, Kraftwerken, chemischen Anlagen, Schiffen, Kränen, Pfählen, Spundwänden, Armaturen, Rohren, Fittings, Flanschen, Kupplungen, Hallen, Dächern und Baustahl, Möbeln, Fenstern, Türen, Parkett, Can-Coating und Coil-Coating, für Bodenbeläge, wie bei Parkdecks oder in Krankenhäusern in Automobillacken als OEM und refinish-Anwendung.

Insbesondere werden die erfindungsgemäßen Beschichtungsmassen als Klar-, Basis- und Decklacke(n), Primern und Füllern eingesetzt.

Bevorzugt werden derartige Beschichtungsmassen bei Temperaturen zwischen Umgebungstemperatur bis 80 °C, bevorzugt bis 60 °C, besonders bevorzugt bis 40 °C eingesetzt. Bevorzugt handelt es sich dabei um solche Gegenstände, die nicht bei hohen Temperaturen gehärtet werden können, wie große Maschinen, Flugzeuge, Großraumfahrzeuge und refinish-Anwendungen.

Die Beschichtung der Substrate erfolgt nach üblichen, dem Fachmann bekannten Verfahren, wobei man wenigstens eine Beschichtungsmasse auf das zu beschichtende Substrat in der gewünschten Stärke aufbringt und die optional enthaltenen flüchtigen Bestandteile der Beschichtungsmasse, optional unter Erhitzen, entfernt. Dieser Vorgang kann gewünschten falls ein- oder mehrfach wiederholt werden. Das Aufbringen auf das Substrat kann in bekannter Weise, z. B. durch Spritzen, Spachteln, Rakeln, Bürsten, Rollen, Walzen, Gießen, Laminieren, Hinterspritzen oder Koextrudieren erfolgen.

Die Dicke einer solchen zu härtenden Schicht kann von 0,1 µm bis mehrere mm betragen, bevorzugt von 1 bis 2.000 µm, besonders bevorzugt 5 bis 200 µm, ganz besonders bevorzugt von 5 bis 60 µm (bezogen auf den Lack im Zustand in dem das Lösungsmittel aus dem Lack entfernt ist).

Die Mischungen können sehr feinteilig in wäßrigen Dispersionen dispergiert werden. Die erhaltenen Dispersionen sind sehr lagerstabil. Darüber hinaus wird eine möglichst hohe Viskositätserniedrigung der wasseremulgierbaren Polyisocyanate durch möglichst geringen Zusatz von Lösungsmittel erreicht.

Es ist ein Vorteil der Mischungen, dass sie in Lacken eine hohen Glanz und gute Filmbildung ergeben. Zudem ergeben die erfindungsgemäßen Mischungen meist eine hohe Chemikalienbeständigkeit.

### Beispiele

Wasserdispergierbares Polyisocyanat 1:
   Es wurden 100g HDI-Isocyanurat mit einem NCO-Gehalt von 22,2% und einer Viskosiät von 2800 mPa*s bei 23°C (kommerziell erhältlich als Basonat^{®} HI 100 der BASF SE, Ludwigshafen) mit 15g eines auf Methanol gestarteten und unter Kaliumhydroxidkatalyse hergestellten monofunktionellen Polyethylenoxid mit einer OH-Zahl von 112 (nach DIN 53240) und einem Molekulargewicht von 500 g/mol. vermischt, aufgeheizt und miteinander umgesetzt. Nach 3 Stunden bei 90°C wurde die Reaktion bei Erreichen des angegebenen NCO-Gehaltes abgebrochen, der der vollständigen Bildung des Urethans entspricht. Das entsprechende Produkt hatte eine Viskosität bei 23°C von 2600 mPa*s und einen NCO Gehalt von 17,9%.
Wasserdispergierbares Polyisocyanat 2:
   Wie in der Schrift WO200188006 beschrieben wurden 237,5g HDI-Isocyanurat mit einem NCO-Gehalt von 22,2% und einer Viskosiät von 2800 mPa*s bei 23°C (kommerziell erhältlich als Basonat^{®} H1 100 der BASF SE, Ludwigshafen), 5,8g Dimethylcyclohexylamine (BASF SE) und 10g 3-(cyclohexylamino)-1-propansulfonsäure gemischt. Nach 3 Stunden bei 80°C wurde die Reaktion bei Erreichen des angegebenen NCO-Gehaltes abgebrochen, der der vollständigen Bildung des Harnstoffs entspricht. Das entsprechende Produkt hatte eine Viskosität bei 23°C von 13300 mPa*s und einen NCO Gehalt von 19,3%.

### Anwendungsbeispiele

Die wasserdispergierbaren Polyisocyanate 1 und 2 wurden weiter im verschiedenen Lösungsmitteln verdünnt (90% 80% und 70%) und die Viskosität von der entsprechende Lösungen gemessen.

Jeweils 0,1g Lösung wurde mit 10g Wasser geschüttelt, bis alles emulgiert war. Nach 24h wurde die mittlere Teilchengröße gemessen.

Die Viskosität wurde bei 23 °C gemäß DIN EN ISO 3219/A.3 in einem Kegel-Platte-System mit einem Geschwindigkeitsgefälle von 1000 s⁻¹ gemesen.

Die gewichtsmittleren Teilchendurchmesser wurden bestimmt durch Lichtstreumessungen mit einem Autosizer 2c der Firma Malven
Vergleichsbeispiel 1:
   a) 90 g des wasseremulgierbaren Polyisocyanats 1 wurde mit 10 g Dipropylenglycol Dimethylether gemischt
   b) 80 g des wasseremulgierbaren Polyisocyanats 1 wurde mit 20 g Dipropylenglycol Dimethylether gemischt
   c) 70 g des wasseremulgierbaren Polyisocyanats 1 wurde mit 30 g Dipropylenglycol Dimethylether gemischt
Vergleichsbeispiel 2:
   a) 90 g des wasseremulgierbaren Polyisocyanats 1 wurde mit 10 g Methoxypropylacetat gemischt
   b) 80 g des wasseremulgierbaren Polyisocyanats 1 wurde mit 20 g Methoxypropylacetat gemischt
   c) 70 g des wasseremulgierbaren Polyisocyanats 1 wurde mit 30 g Methoxypropylacetat gemischt
Vergleichsbeispiel 3:
   a) 90 g des wasseremulgierbaren Polyisocyanats 1 wurde mit 10 g Butylglycolacetat gemischt
   b) 80 g des wasseremulgierbaren Polyisocyanats 1 wurde mit 20 g Butylglycolacetat gemischt
   c) 70 g des wasseremulgierbaren Polyisocyanats 1 wurde mit 30 g Butylglycolacetat gemischt
Vergleichsbeispiel 4:
   a) 90 g des wasseremulgierbaren Polyisocyanats 1 wurde mit 10 g Propylencarbonat gemischt
   b) 80 g des wasseremulgierbaren Polyisocyanats 1 wurde mit 20 g Propylencarbonat gemischt
   c) 70 g des wasseremulgierbaren Polyisocyanats 1 wurde mit 30 g Propylencarbonat gemischt
Vergleichsbeispiel 5:
   a) 90 g des wasseremulgierbaren Polyisocyanats 1 wurde mit 10 g TME 1,1,2,2,- Tetramethoxyethan gemischt
   b) 80 g des wasseremulgierbaren Polyisocyanats 1 wurde mit 20 g TME 1,1,2,2,- Tetramethoxyethan gemischt
   c) 70 g des wasseremulgierbaren Polyisocyanats 1 wurde mit 30 g TME 1,1,2,2,- Tetramethoxyethan gemischt
Vergleichsbeispiel 6:
   a) 90 g des wasseremulgierbaren Polyisocyanats 1 wurde mit 10 g Dioxan gemischt
   b) 80 g des wasseremulgierbaren Polyisocyanats 1 wurde mit 20 g Dioxan gemischt
   c) 70 g des wasseremulgierbaren Polyisocyanats 1 wurde mit 30 g Dioxan gemischt
Beispiel 1:
   a) 90 g des wasseremulgierbaren Polyisocyanats 1 wurde mit 10 g Dioxolan gemischt
   b) 80 g des wasseremulgierbaren Polyisocyanats 1 wurde mit 20 g Dioxolan gemischt
   c) 70 g des wasseremulgierbaren Polyisocyanats 1 wurde mit 30 g Dioxolan gemischt

### Wasserdispergierbares Polyisocyanat 1:

Das wasserdispergierbare Polyisocyanat 1 weißt bei 23°C eine Viskosität von 2600 mPa*s auf.

| Vergleichsbeispiel | Lösungsmittel | Verdünnung | Viskosität @23°C (mP*s) | Mittlere Teilchengröße (nm) |
|---|---|---|---|---|
| 1a) | Dipropylenglycol Dimethylether | 90 % | 600 | 140 |
| 1b) | | 80 % | 210 | 194 |
| 1c) | | 70 % | 80 | 282 |
| 2a) | Methoxypropylacetat | 90 % | 650 | 130 |
| 2b) | | 80 % | 200 | 175 |
| 2c) | | 70 % | 60 | 241 |
| 3a) | Butylglycolacetat | 90 % | 2740 | 179 |
| 3b) | | 80 % | 550 | 205 |
| 3c) | | 70 % | 180 | 306 |
| 4a) | Propylen carbonat | 90 % | 900 | 92 |
| 4b) | | 80 % | 420 | 94 |
| 4c) | | 70 % | 200 | 168 |
| 5a) | TME 1,1,2,2,- Tetramethoxyethan | 90 % | 950 | 107 |
| 5b) | | 80 % | 310 | 146 |
| 5c) | | 70 % | 170 | 353 |
| 6a) | Dioxan | 90 % | 700 | 115 |
| 6b) | | 80 % | 250 | 142 |
| 6c) | | 70 % | 100 | 204 |
| Beispiel | | | | |
| 1a) | Dioxolan | 90 % | 450 | 112 |
| 1b) | | 80 % | 160 | 143 |
| 1c) | | 70 % | 50 | 203 |

Vergleichsbeispiel 7:
   a) 90 g des wasseremulgierbaren Polyisocyanats 2 wurde mit 10 g Dipropylenglycol Dimethylether gemischt
   b) 80 g des wasseremulgierbaren Polyisocyanats 2 wurde mit 20 g Dipropylenglycol Dimethylether gemischt
   c) 70 g des wasseremulgierbaren Polyisocyanats 2 wurde mit 30 g Dipropylenglycol Dimethylether gemischt
Vergleichsbeispiel 8:
   a) 90 g des wasseremulgierbaren Polyisocyanats 2 wurde mit 10 g Methoxypropylacetat gemischt
   b) 80 g des wasseremulgierbaren Polyisocyanats 2 wurde mit 20 g Methoxypropylacetat gemischt
   c) 70 g des wasseremulgierbaren Polyisocyanats 2 wurde mit 30 g Methoxypropylacetat gemischt
Vergleichsbeispiel 9:
   a) 90 g des wasseremulgierbaren Polyisocyanats 2 wurde mit 10 g Butylglycolacetat gemischt
   b) 80 g des wasseremulgierbaren Polyisocyanats 2 wurde mit 20 Butylglycolacetat gemischt
   c) 70 g des wasseremulgierbaren Polyisocyanats 2 wurde mit 30 g Butylglycolacetat gemischt
Vergleichsbeispiel 10:
   a) 90 g des wasseremulgierbaren Polyisocyanats 2 wurde mit 10 g Propylencarbonat gemischt
   b) 80 g des wasseremulgierbaren Polyisocyanats 2 wurde mit 20 g Propylencarbonat gemischt
   c) 70 g des wasseremulgierbaren Polyisocyanats 2 wurde mit 30 g Propylencarbonat gemischt
Vergleichsbeispiel 11:
   a) 90 g des wasseremulgierbaren Polyisocyanats 2 wurde mit 10 g TME 1,1,2,2,- Tetramethoxyethan gemischt
   b) 80 g des wasseremulgierbaren Polyisocyanats 2 wurde mit 20 g TME 1,1,2,2,- Tetramethoxyethan gemischt
   c) 70 g des wasseremulgierbaren Polyisocyanats 2 wurde mit 30 g TME 1,1,2,2,- Tetramethoxyethan gemischt
Vergleichsbeispiel 12:
   a) 90 g des wasseremulgierbaren Polyisocyanats 2 wurde mit 10 g Dioxan gemischt
   b) 80 g des wasseremulgierbaren Polyisocyanats 2 wurde mit 20 g Dioxan gemischt
   c) 70 g des wasseremulgierbaren Polyisocyanats 2 wurde mit 30 g Dioxan gemischt
Beispiel 2:
   a) 90 g des wasseremulgierbaren Polyisocyanats 2 wurde mit 10 g Dioxolan gemischt
   b) 80 g des wasseremulgierbaren Polyisocyanats 2 wurde mit 20 g Dioxolan gemischt
   c) 70 g des wasseremulgierbaren Polyisocyanats 2 wurde mit 30 g Dioxolan gemischt

### Wasserdispergierbares Polyisocyanat 2:

Das wasserdispergierbare Polyisocyanat 2 weißt bei 23°C eine Viskosität von 3300 mPa*s auf.

| Vergleichsbeispiel | Lösungsmittel | Verdünnung | Viskosität @23°C (mP*s) | Mittlere Teilchengröße (nm) |
|---|---|---|---|---|
| 7a) | Dipropylenglycol Dimethylether | 90 % | 2500 | 3350 |
| 7b) | | 80 % | 520 | 1550 |
| 7c) | | 70 % | 150 | 195 |
| 8a) | Methoxypropylacetat | 90 % | 2300 | 3657 |
| 8b) | | 80 % | 540 | 1817 |
| 8c) | | 70 % | 170 | 1249 |
| 9a) | Butylglycolacetat | 90 % | 2740 | 3146 |
| 9b) | | 80 % | 550 | 3172 |
| 9c) | | 70 % | 180 | 3793 |
| 10a) | Propylencarbonat | 90 % | 900 | 2741 |
| 10b) | | 80 % | 420 | 4122 |
| 10c) | | 70 % | 200 | 1378 |
| 11a) | TME 1,1,2,2,- Tetramethoxyethan | 90 % | 3100 | 2935 |
| 11b) | | 80 % | 880 | 2635 |
| 11c) | | 70 % | 360 | 523 |
| 12a) | Dioxan | 90 % | 2000 | 2568 |
| 12b) | | 80 % | 620 | 526 |
| 12c) | | 70 % | 40 | 249 |
| Beispiel | | | | |
| 2a) | Dioxolan | 90 % | 1300 | 2385 |
| 2b) | | 80 % | 270 | 493 |
| 2c) | | 70 % | 80 | 138 |

## Patentansprüche

1. Mischung enthaltend,
a) mindestens ein Polyisocyanat,
b) mindestens ein Umsetzungsprodukt mindestens eines Polyisocyanates b1) mit mindestens einer Verbindung b2) enthaltend mindestens eine hydrophile, nicht gegenüber Isocyanat reaktive Gruppe (Gruppe A) und genau eine gegenüber Isocyanat reaktive Gruppe (Gruppe B)
und
c) Dioxolan.

2. Mischung nach Anspruch 1 , wobei es sich bei der Gruppe (A) um eine ionische und/oder in eine ionische Gruppe überführbare Gruppe handelt.

3. Mischung nach Anspruch 2, wobei der Gehalt der Gruppe (A) 0,1 bis 3 mol pro kg der Komponenten a) und b) beträgt.

4. Mischung nach Anspruch 1 , wobei es sich bei der Gruppe (A) um eine nichtionische Gruppe handelt.

5. Mischung nach Anspruch 4, wobei es sich bei der Gruppe (A) um eine Polyalkylenethergruppe handelt.

6. Mischung nach Anspruch 4 oder 5, wobei es sich bei der Gruppe (A) um eine Polyethylenethergruppe handelt.

7. Mischung nach mindestens einem der Ansprüche 4 bis 6, wobei der Gehalt der Gruppe (A) 0,1 bis 30 Gew.-%, bezogen auf die Komponente a) und b), beträgt.

8. Mischung nach mindestens einem der Ansprüche 1 bis 7, wobei es sich bei dem Polyisocyanat (a) um ein aliphatisches Polyisocyanat handelt.

9. Mischung nach mindestens einem der Ansprüche 1 bis 8, wobei das Polyisocyanat (a) eine Funktionalität von mehr als 2 aufweist.

10. Mischung nach mindestens einem der Ansprüche 1 bis 9, wobei es sich bei der reaktiven Gruppe um eine Hydroxy-, Mercapto- oder primäre oder sekundäre Aminogruppe handelt.

11. Mischungen nach einem der Ansprüche 1 bis 10, enthaltend 2 bis 40 Gew.-% Dioxolan bezogen auf die Summe der Komponenten a) bis c).

12. Verwendung einer Mischung gemäß einem der Ansprüche 1 bis 11 als Zusatzmittel für wässrige Polymerdispersionen.

13. Zweikomponenten-Beschichtungsmasse erhältlich durch Zusatz einer Mischung, enthaltend
a) mindestens ein Polyisocyanat
b) mindestens ein Umsetzungsprodukt eines Polyisocyanates b1) mit mindestens einer Verbindung b2) mit mindestens einer hydrophilen Gruppe (Gruppe A) und genau einer gegenüber Isocyanat reaktiven Gruppe (Gruppe B)
und
c) Dioxolan
zu einer wäßrigen Polymerdispersion.

14. Zweikomponenten-Beschichtungsmasse nach Anspruch 13, wobei es sich bei den in der wässrigen Polymerdispersion dispergierten Polymeren um Polyacrylatpolyole, Polyesterpolyole und Polyurethanpolyole handelt.

## Claims

1. A mixture comprising
a) at least one polyisocyanate,
b) at least one reaction product of at least one polyisocyanate b1 with at least one compound b2) comprising at least one hydrophilic group which is not reactive toward isocyanate (group A) and precisely one group which is reactive toward isocyanate (group B) and
c) dioxolane.

2. The mixture according to claim 1, wherein the group (A) is an ionic group and/or a group which can be converted into an ionic group.

3. The mixture according to claim 2, wherein the content of the group (A) is from 0.1 to 3 mol per kg of the components a) and b).

4. The mixture according to claim 1, wherein the group (A) is a nonionic group.

5. The mixture according to claim 4, wherein the group (A) is a polyalkylene ether group.

6. The mixture according to claim 4 or 5, wherein the group (A) is a polyethylene ether group.

7. The mixture according to at least one of claims 4 to 6, wherein the content of the group (A) is from 0.1 to 30% by weight, based on the components a) and b) .

8. The mixture according to at least one of claims 1 to 7, wherein the polyisocyanate (a) is an aliphatic polyisocyanate.

9. The mixture according to at least one of claims 1 to 8, wherein the polyisocyanate (a) has a functionality of more than 2.

10. The mixture according to at least one of claims 1 to 9, wherein the reactive group is a hydroxy, mercapto or primary or secondary amino group.

11. The mixture according to any of claims 1 to 10 comprising from 2 to 40% by weight of dioxolane based on the sum of the components a) to c) .

12. The use of a mixture according to any of claims 1 to 11 as additive for aqueous polymer dispersions.

13. A two-component coating composition obtainable by addition of a mixture comprising
a) at least one polyisocyanate,
b) at least one reaction product of a polyisocyanate b1 with at least one compound b2) having at least one hydrophilic group (group A) and precisely one group which is reactive toward isocyanate (group B)
and
c) dioxolane
to an aqueous polymer dispersion.

14. The two-component coating composition according to claim 13, wherein the polymers dispersed in the aqueous polymer dispersion are polyacrylate polyols, polyester polyols and polyurethane polyols.

## Revendications

1. Mélange contenant,
a) au moins un polyisocyanate,
b) au moins un produit de transformation d'au moins un polyisocyanate b1 avec au moins un composé b2) contenant au moins un groupe hydrophile, non réactif envers un isocyanate (groupe A) et exactement un groupe réactif envers un isocyanate (groupe B)
et
c) du dioxolanne.

2. Mélange selon la revendication 1, le groupe (A) étant un groupe ionique et/ou un groupe convertible en groupe ionique.

3. Mélange selon la revendication 2, la teneur du groupe (A) étant de 0,1 à 3 moles par kg des composants a) et b).

4. Mélange selon la revendication 1, le groupe (A) étant un groupe non ionique.

5. Mélange selon la revendication 4, le groupe (A) étant un groupe poly(éther d'alkylène).

6. Mélange selon la revendication 4 ou 5, le groupe (A) étant un groupe poly(éther d'éthylène).

7. Mélange selon au moins l'une quelconque des revendications 4 à 6, la teneur du groupe (A) étant de 0,1 à 30 % en poids, par rapport aux composants a) et b) .

8. Mélange selon au moins l'une quelconque des revendications 1 à 7, le polyisocyanate (a) étant un polyisocyanate aliphatique.

9. Mélange selon au moins l'une quelconque des revendications 1 à 8, le polyisocyanate (a) présentant une fonctionnalité de plus de 2.

10. Mélange selon au moins l'une quelconque des revendications 1 à 9, le groupe réactif étant un groupe hydroxy, mercapto ou amino primaire ou secondaire.

11. Mélange selon l'une quelconque des revendications 1 à 10, contenant 2 à 40 % en poids de dioxolanne par rapport à la somme des composants a) à c) .

12. Utilisation d'un mélange selon l'une quelconque des revendications 1 à 11 en tant qu'additif pour des dispersions aqueuses de polymère.

13. Masse de revêtement à deux composants pouvant être obtenue par ajout d'un mélange, contenant
a) au moins un polyisocyanate,
b) au moins un produit de transformation d'un polyisocyanate b1 avec au moins un composé b2) contenant au moins un groupe hydrophile (groupe A) et exactement un groupe réactif envers un isocyanate (groupe B)
et
c) du dioxolanne
à une dispersion aqueuse de polymère.

14. Masse de revêtement à deux composants selon la revendication 13, les polymères dispersés dans la dispersion aqueuse de polymère étant des polyacrylatepolyols, des polyesterpolyols et des polyuréthanepolyols.
